# EUROPEAN PATENT APPLICATION

(11) **EP 3 992 488 A1**
(43) Date of publication of application: **04.05.2022**
(21) Application number: 20204900.3
(22) Date of filing: 30.10.2020
(51) Int. Cl.: F16D 65/28, B60T 13/569, B60T 17/08

(54) **PNEUMATIC SERVICE BRAKE ACTUATOR**

(71) Applicant: ZF CV Systems Europe BV, 1170 Brussels (BE)
(72) Inventor: GLOWACKI, Adam, 50-227 Wroclaw (PL); GUTKOWSKI, Maciej, 58-100 Swidnica (PL)
(74) Representative: Rabe, Dirk-Heinrich

(57) **Abstract**

A pneumatic service brake actuator (8) for a vehicle, in particular a commercial vehicle, comprising an actuator housing (12) having a pressure chamber (14) and a piston chamber (16), a diaphragm (18) that separates the pressure chamber (14) from the piston chamber (16) and is elastically moveable as a function of pressure inside the pressure chamber (14), and a brake piston (20) that is configured to reciprocatingly move between a retained position (44) and an extended position, the brake piston (20) comprising a head plate (22), the head plate (22) and the diaphragm (18) being connected to one another by means of an overmolding bond (24).

## Description

The invention relates to a pneumatic service brake actuator for a vehicle, in particular a commercial vehicle, comprising an actuator housing having a pressure chamber and a piston chamber, a diaphragm that separates the pressure chamber from the piston chamber and is elastically movable as a function of pressure inside the pressure chamber, and a brake piston that is configured to reciprocatingly move between a retained position and an extended position, the brake piston comprising a head plate.

Pneumatic service brake actuators of the aforementioned kind are commonly used in the commercial vehicle industry. It is the aim of a pneumatic service brake actuator to generate a brake force which is transmitted to the vehicle wheel.

In pneumatic service brake actuators, brake pistons are utilized to transfer the service brake force from a service brake pressure chamber via a diaphragm and a brake piston towards a wheel brake. Brake pistons and diaphragms have to withstand a substantial number of braking cycles without mechanical failure. Also, the devices have to fulfill rigorous safety requirements since their malfunction will likely lead to a loss of brake performance.

A major challenge with state of the art pneumatic service brake actuators relates to the connection of the brake piston to the diaphragm. In the state of the art, solutions are known in which the head plate of the brake piston loosely abuts against the diaphragm. For these configurations, slippage between the components is common, significantly reducing the life span of the diaphragm.

To approach this challenge, several solutions are known from the prior art. GB 2 088 525 A proposes different connection types for brake piston head plates and diaphragms. In this regard, it is proposed to join the components by a molded-in projection on the diaphragm or a molded-in annular lip for centering the position of the head plate relative to the diaphragm. US 2012/0006192 A1 proposes a rim projecting from the diaphragm for engaging the brake piston head plate.

While these solutions help to avoid slippage of the brake piston head plate on the diaphragm, they increase the manufacturing complexity, increase the overall actuator mass and the assembly complexity. Also, under certain circumstances, the brake piston head plate might separate from the diaphragm, which is highly unwanted.

As a consequence, it was an object of the invention to provide a pneumatic service brake actuator of the initially mentioned type which overcomes the aforementioned problems as much as possible. In particular, it was an object of the invention to provide an improved pneumatic service brake actuator that provides a higher reliability, less weight, and less parts to assemble. In the least, it was an object of the invention to provide an alternative pneumatic service brake actuator.

The invention attains the aforementioned object by suggesting a pneumatic service brake actuator according to claim 1. According to the invention, the head plate and the diaphragm are connected to one another by means of an overmolding bond.

The invention is based upon the realization that by connecting the head plate of the brake piston to the diaphragm by means of an overmolding bond, the two parts are reliably connected to one another. An unwanted separation of the components during operation is inhibited. Furthermore, the mass of the pneumatic service brake actuator is reduced while less parts are to be assembled. Furthermore, it has been found that the thickness of the head plate can be reduced substantially.

In a preferred embodiment of the invention, the head plate is at least partially molded into the diaphragm. This kind of connection can be manufactured cost-efficiently and provides a reliable connection between the components reducing their mass compared to state of the art solutions. Furthermore, due to less parts involved, the pneumatic service brake actuator can be assembled significantly faster.

According to a preferred embodiment, the head plate comprises a thickness of x mm - y mm, in particular z mm. Compared to known solutions, the thickness of the head plate is reduced significantly.

Preferably, the diaphragm comprises or is made of at least one of the following materials: rubber, ...

In a further preferred embodiment of the pneumatic service brake actuator, the head plate comprises at least one alignment pin for aligning the head plate to the diaphragm. This design has been found to be beneficial to inhibit a relative movement between the diaphragm and the head plate and ensure an exact alignment of the parts.

Preferably, the head plate comprises or is made of at least one of the following: Steel, in particular stamped steel. Steel, in particular stamped steel, has been found to be durable, easy to manufacture and beneficial for a molded connection to the diaphragm.

According to yet another preferred embodiment, the pneumatic service brake actuator comprises a piston rod that is movably accommodated in the piston chamber for transmitting a brake force from the brake piston to a vehicle brake, wherein the brake piston and the piston rod are connected to one another by at least one of the following: threaded connection, universal joint, in particular cardan joint, adhesive joint. These types of connections have been found to be beneficial to setup the position of the piston rod relative to the brake piston during assembly which, in turn, eliminates the need for other adjustment elements, such as a pressure pieces, for example.

According to a preferred embodiment of the invention, the brake piston comprises a bushing that is formed as a tubular projection extending away from the head plate, wherein the bushing is configured to partially accommodate the piston rod. Preferably, the bushing is integrally formed with the head plate. This helps to further reduce the number of required parts, reduces the overall weight of the actuator and simplifies the assembly process.

It is furthermore preferred that the bushing and the piston rod are connected to one another by means of the threaded connection, wherein the bushing comprises an internal thread, and the piston rod comprises an external thread that is dimensioned such that the external thread of the piston rod engages the internal thread of the bushing.

Preferably, the piston rod comprises a nut that is engaging the external thread and directly or indirectly abuts against the brake piston for blocking the position of the brake piston relative to the piston rod. It has been found that these features allow for an easy to assemble and durable connection between the components that can be adjusted during assembly and afterwards blocked to ensure a durable operation of the actuator.

According to a preferred embodiment, the brake piston comprises a washer being arranged in between the nut and the bushing. The washer helps to ensure that transmitted forces are transferred more uniformly.

According to a second aspect of the invention or according to a preferred embodiment, a spring boot is arranged in the piston chamber for pushing the brake piston towards its retained position.

While in state of the art systems, combinations of boots and springs are utilized, combining these parts into one single component reduces the overall part complexity of the actuator, reduces its weight and simplifies its assembly.

According to a preferred embodiment, the spring boot comprises a first end portion that is connected to the actuator housing and a second end portion being opposite from the first end portion, wherein the second end portion abuts against the nut for transferring a return spring force to the piston rod and the brake piston.

In other words, the nut is utilized for two different applications: On the one hand to block the connection between the piston rod and the brake piston and on the other hand to introduce the return spring force from the spring boot into the piston rod and the brake piston. Hence, the number of required parts is reduced and the assembly of the actuator significantly simplified.

In a second aspect, the invention relates to a piston and diaphragm assembly for a pneumatic service brake actuator of a vehicle, in particular a commercial vehicle, the assembly comprising a diaphragm for separating a pressure chamber from a piston chamber, and a brake piston comprising a head plate. The head plate and the diaphragm are connected to one another by means of an overmolding bond.

In jet another aspect, the invention relates to a method for producing a piston and diaphragm assembly according to the second aspect of the invention, comprising the steps of providing a brake piston comprising a head plate and overmolding the head plate to form a diaphragm that is connected to the head plate.

In a further aspect, the invention relates to a method for assembling a pneumatic service brake actuator for a vehicle, in particular a commercial vehicle, the method comprising providing an actuator housing having a pressure chamber and a piston chamber, providing a piston and diaphragm assembly according to the second aspect of the invention, and assembling the piston and diaphragm assembly to the actuator housing.

The piston and diaphragm assembly, the method for producing the piston and diaphragm assembly, and the method for assembling a pneumatic service brake actuator take advantage of the same benefits and preferred embodiments as the pneumatic service brake actuator according to the invention. In this regard and in order to avoid unnecessary repetitive, reference is made to the above explanations.
For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

This invention will now be described with reference to the accompanying drawings which illustrate, by way of example and not by way of limitation, one of several possible embodiments of the clutch servo proposed herein, and wherein:
- Fig. 1:: shows a vehicle brake arrangement comprising a preferred embodiment of a pneumatic service brake actuator according to the concept of the invention in a sectional view; and
- Fig. 2:: shows a detailed sectional view of the pneumatic service brake actuator according to Fig. 1.

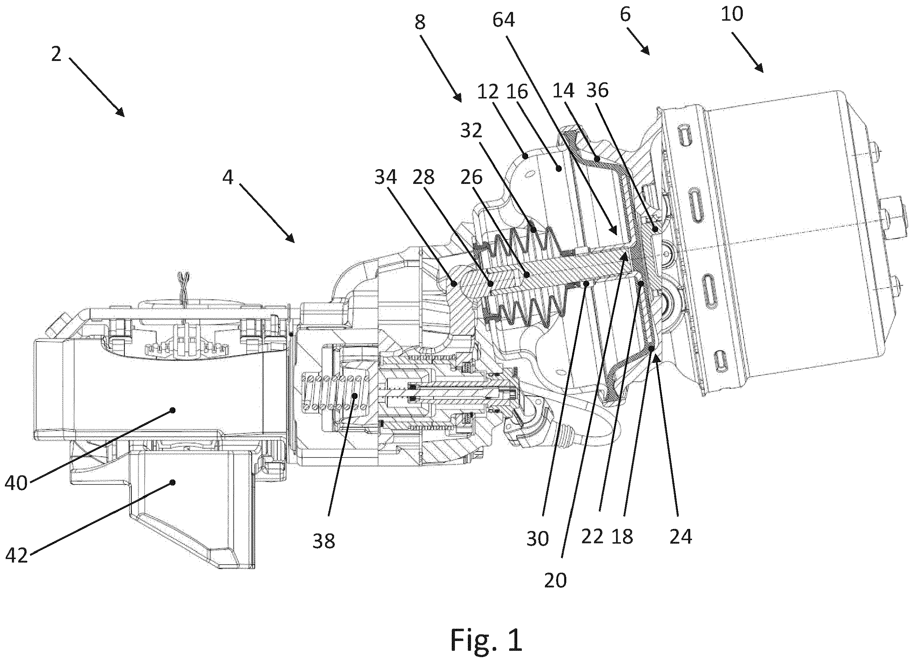

Fig. 1 shows a vehicle brake arrangement 2. The vehicle brake arrangement 2 comprises a disc brake 4 and a brake actuator 6.

The disc brake 4 comprises a brake caliper 40 and a brake carrier 42. These components are known from the prior art. A braking force generated by the brake actuator 6 is transferred to the brake lever 34. A brake spring 38 moves the brake lever 34 towards the retained position 44 as shown in Fig. 1.

The brake actuator 6 comprises a pneumatic service brake actuator 8 for providing a service brake functionality and a spring brake actuator 10 for providing parking and emergency braking functionalities. The spring brake actuator 10 transmits its braking force via a spring brake rod 36 to the pneumatic service brake actuator 8.

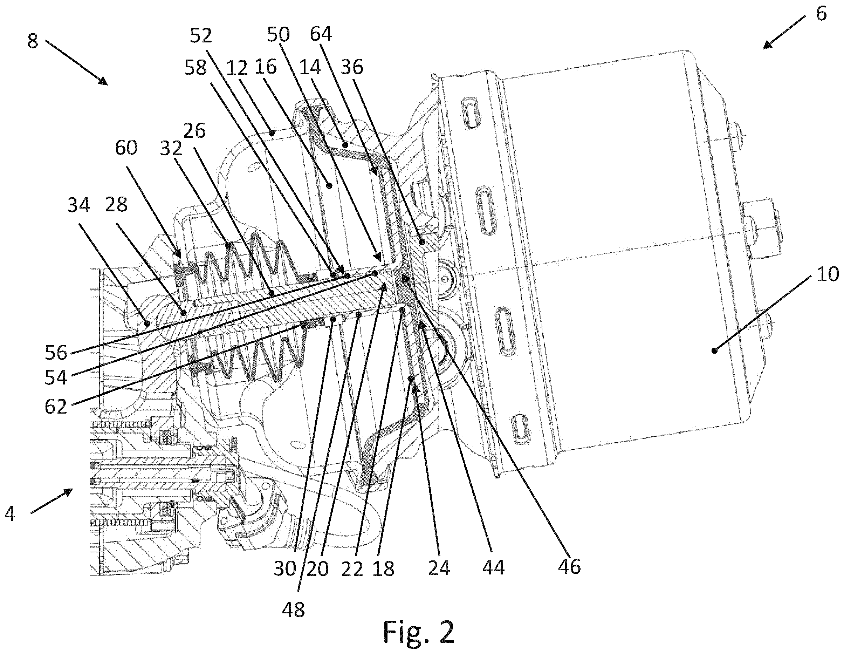

For a detailed description of the pneumatic service brake actuator 8, reference is made to the following detailed description of Fig. 2.

Fig. 2 shows a detailed view of the pneumatic service brake actuator 8. The pneumatic service brake actuator 8 comprises an actuator housing 12 having a pressure chamber 14 and a piston chamber 16. The pressure chamber 14 is separated from the piston chamber 16 by a diaphragm 18 which is elastically movable as a function of pressure inside the pressure chamber 14.

The pneumatic service brake actuator 8 moreover comprises a brake piston 20 that is configured to reciprocatingly move between a retained position 44 and an extended position. The retained position 44 is shown in Figs. 1 and 2.

The brake piston 20 comprises a head plate 22. The head plate 22 and the diaphragm 18 are connected to one another by means of an overmolding bond 24. The head plate 22 is at least partially molded into the diaphragm 18.

Furthermore, the head plate 22 comprises at least one alignment pin 46 for aligning the head plate 22 to the diaphragm 18. The head plate 22 is made of stamped steel. The brake piston 20 and the diaphragm 18 form a piston and diaphragm assembly 64.

Moreover, a piston rod 26 is movably accommodated in the piston chamber 16. The piston rod 26 transmits a brake force from the brake piston 20 to the disc brake 4. The brake piston 20 and the piston rod 26 are connected to one another by a threaded connection 52. In this regard, the brake piston 20 comprises a bushing 48 being formed as a tubular projection 50 extending away from the head plate 22. The bushing 48 is configured to partially accommodate the piston rod 26. The bushing 48 comprises an internal thread 54. The piston rod 26 comprises an external thread 56. The external thread 56 is dimensioned such that the external thread 56 of the piston rod 26 engages the internal thread 54 of the bushing 48. The piston rod 26 optionally comprises a pressure piece 28.

The piston rod 26 comprises a nut 30. The nut 30 engages the external thread 56 and indirectly abuts against the brake piston 20. This blocks the position of the brake piston 20 relative to the piston rod 26. Furthermore, the brake piston 20 comprises a washer 58 being arranged between the nut 30 and the bushing 48.

Additionally, the pneumatic service brake actuator 8 comprises a spring boot 32 which is arranged in the piston chamber 16. The spring boot 32 pushes the brake piston 20 towards its retained position 44. The spring boot 32 comprises a first end portion 60 and a second end portion 62 being opposite from the first end portion 60. The first end portion 60 is connected to the actuator housing 12. The second end portion 62 abuts against the nut 30. With this, a spring force from the spring boot 32 is transferred to the piston rod 26 and - in turn - to the brake piston 20.

### List of references (part of the description)

- 2: vehicle brake arrangement
- 4: disc brake
- 6: brake actuator
- 8: pneumatic service brake actuator
- 10: spring brake actuator
- 12: actuator housing
- 14: pressure chamber
- 16: piston chamber
- 18: diaphragm
- 20: brake piston
- 22: head plate
- 24: overmolding bond
- 26: piston rod
- 28: pressure piece
- 30: nut
- 32: spring boot
- 34: brake lever
- 36: spring brake rod
- 38: brake spring
- 40: brake caliper
- 42: brake carrier
- 44: retained position
- 46: alignment pin
- 48: bushing
- 50: tubular projection
- 52: threaded connection
- 54: internal thread
- 56: external thread
- 58: washer
- 60: first end portion
- 62: second end portion
- 64: piston and diaphragm assembly

## Claims

1. A pneumatic service brake actuator (8) for a vehicle, in particular a commercial vehicle, comprising
- an actuator housing (12) having a pressure chamber (14) and a piston chamber (16),
- a diaphragm (18) that separates the pressure chamber (14) from the piston chamber (16) and is elastically moveable as a function of pressure inside the pressure chamber (14), and
- a brake piston (20) that is configured to reciprocatingly move between a retained position (44) and an extended position, the brake piston (20) comprising a head plate (22),
**characterized in that** the head plate (22) and the diaphragm (18) are connected to one another by means of an overmolding bond (24).

2. The brake actuator (8) of claim 1,
wherein the head plate (22) is at least partially molded into the diaphragm (18).

3. The brake actuator (8) of claims 1 or 2,
**characterized in that** the head plate (22) comprises at least one alignment pin (46) for aligning the head plate (22) to the diaphragm (18).

4. The brake actuator (8) according to any of the preceding claims, **characterized in that** the head plate (22) comprises or is made of at least one of the following:
- steel, in particular stamped steel.

5. The brake actuator (8) according to any of the preceding claims, **characterized by** a piston rod (26) that is movably accommodated in the piston chamber (16) for transmitting a brake force from the brake piston (20) to a vehicle brake (4),
wherein the brake piston (20) and the piston rod (26) are connected to one another by at least one of the following:
- threaded connection (52),
- universal joint, in particular cardan joint,
- adhesive joint.

6. The brake actuator (8) according to claim 5,
wherein the brake piston (20) comprises a bushing (48) that is formed as a tubular projection (50) extending away from the head plate (22), wherein the bushing (48) is configured to partially accommodate the piston rod (26).

7. The brake actuator (8) according to claim 6,
**characterized in that** the bushing (48) and the piston rod (26) are connected to one another by means of the threaded connection (52), wherein the bushing (48) comprises an internal thread (54), and the piston rod (26) comprises an external thread (56) that is dimensioned such that the external thread (56) of the piston rod (26) engages the internal thread (54) of the bushing (48).

8. The brake actuator (8) according to claim 7,
wherein the piston rod (26) comprises a nut (30) that is engaging the external thread (56) and directly or indirectly abuts against the brake piston (20) for blocking the position of the brake piston (20) relative to the piston rod (26).

9. The brake actuator (8) according to claim 8,
wherein the brake piston (20) comprises a washer (58) being arranged in between the nut (30) and the bushing (48).

10. The brake actuator (8) according to the preamble of claim 1 or according to any of the preceding claims,
**characterized by** a spring boot (32) that is arranged in the piston chamber (16) for pushing the brake piston (20) towards its retained position (44).

11. The brake actuator (8) according to claim 10,
**characterized in that** the spring boot (32) comprises a first end portion (60) that is connected to the actuator housing (12) and a second end portion (62) being opposite from the first end portion (60), wherein the second end portion (62) abuts against the nut (30) for transferring a return spring force to the piston rod (26) and the brake piston (20).

12. A piston and diaphragm assembly (64) for a pneumatic service brake actuator of a vehicle, in particular a commercial vehicle, the assembly (64) comprising:
- a diaphragm (18) for separating a pressure chamber (14) from a piston chamber (16), and
- a brake piston (20) comprising a head plate (22),
**characterized in that** the head plate (22) and the diaphragm (18) are connected to one another by means of an overmolding bond (24).

13. A method for producing a piston and diaphragm assembly (64) according to claim 12, comprising the steps:
- providing a brake piston comprising a head plate (22);
- overmolding the head plate (22) to form a diaphragm (18) that is connected to the head plate (22).

14. A method for assembling a pneumatic service brake actuator (8) for a vehicle, in particular a commercial vehicle, the method comprising:
- providing an actuator housing (12) having a pressure chamber (14) and a piston chamber (16);
- providing a piston and diaphragm assembly (64) according to claim 13;
- assembling the piston and diaphragm assembly (64) to the actuator housing (12).
